# EUROPEAN PATENT APPLICATION

(11) **EP 4 393 293 A1**
(43) Date of publication of application: **03.07.2024**
(21) Application number: 23150050.5
(22) Date of filing: 02.01.2023
(51) Int. Cl.: A01D 75/00, A01G 22/00, G06T 7/00, A01B 79/00, A01D 41/127, A01B 79/02

(54) **METHOD FOR ANALYSING ABOVE GROUND CROPS IN AN AGRICULTURAL FIELD**

(71) Applicant: KWS SAAT SE & Co. KGaA, 37574 Einbeck (DE)
(72) Inventor: The designation of the inventor has not yet been filed
(74) Representative: Eisenführ Speiser

(57) **Abstract**

The invention relates to a method, an analysis device, and a system for analysing above ground crops in an agricultural field. The method comprises providing a harvester with a harvesting device to harvest plants in an agricultural field, arranging an analysis device behind the harvesting device, moving the harvester in its travel direction through the agricultural field and harvesting plants in at least one row of the agricultural field, recording images by using the analysis device, measuring distances between the analysis device and plants by using the analysis device, establishing a position of the analysis device, combining data of at least one image of a plant recorded with the analysis device and data of at least one distance between the analysis device and the plant that is on the at least one image measured by the analysis device, determining plant characteristics of a plant dependent on the combined data.

## Description

The invention relates to a method for analysing above ground crops in an agricultural field and to an analysis device for analysing above ground crops in an agricultural field. Furthermore, the invention relates to a system for harvesting plants and analysing above ground crops in an agricultural field and to a use of an analysis device and/or a system for analysing georeferenced plants and/or parts of plants during harvesting.

Essential plant traits such as ear height as an example for morphological plant traits and plant senescence as an example for physiological/functional plant traits show their characteristics only or dominantly within the plant canopy and cannot be assessed from the outside by e.g. aerial phenotyping platforms. Because crops such as for example maize are typically sown with high plant densities with multiple plants per square meter in a row pattern. Typically, the row-to-row distance thereby is around 0.7 m and the planting distances around 0.1 m. This sowing pattern fortifies a phyllotaxis adaption of the plants perpendicular to the sowing direction and thereby allows the plant leaves to fully occupy the interrow canopy space (i.e. the canopy space between two rows) to optimize their light interception efficiency with the aim to maximize their individual growth. Typical plant heights for commercial corn are around 3 m or even above.

For sensor-based within-canopy measurements of unaltered corn canopies this results in multiple challenges and drawbacks.

Some sensor-based methods regarding analysing plants have been described. EP 1777486 A1 describes a sensor system for determining physical characteristics of individual plants within a row located in an agricultural environment. The sensor system comprises a sensor assembly including a plurality of emitters and a corresponding plurality of receivers disposed opposite one another. For an application of such a system, the sensor assembly has to be positioned around the plants that are analysed, resulting in a high analysis effort. US 9030549 B2 describes a method of distinguishing plants within a row of plants, wherein images are taken from above the plants, in order to determine whether to remove or retain each plant. US 10127450 B2 describes a method for identifying gaps and determining density of plants and in a plant row. And DE 102015221085 A1 describes a method for identifying plants in a field, wherein an optical and/or infrared sensor is used to obtain information on the plants in the field.

Ground-based platforms typically used and described in the documents mentioned above are either high clearance tractors driving in two or more of the parallel interrow spaces or small-scale platforms e.g. robots, which drive in a single interrow space or multitude parallel interrow spaces. The narrow row-to-row distance results in additionally high demands on the applicable sensor technology. Robots driving within a canopy have to overcome the degradation of a GNSS signal to ensure a proper georeferencing of their data. Furthermore, leaves in the interrow canopy space result in a patchy and low intensity lightning regime for passive sensors. The leaves occupying the interrow canopy space lead to artificial plant movement when a sensor device is moved within the rows. Such plant movement is disadvantageous for precise measurements, and hence, a low driving speed is required for this kind of measurement platforms. This highly degrades their throughput and applicability.

Thus, there is a need for an improved solution, which addresses at least one of the needs and/or reduces at least one of the disadvantages mentioned above. In particular, it exists a need for a method and an analysis device for analysing above ground crops in an agricultural field, which allow for more effective and/or more reliable analysis of plants and/or parts of plants within an agricultural field.

According to a first aspect, it is provided a method for analysing above ground crops in an agricultural field, comprising providing a harvester with a harvesting device, wherein the harvesting device is adapted to harvest plants and/or parts of plants in an agricultural field, arranging an analysis device behind the harvesting device in respect to a travel direction of the harvester, wherein preferably the analysis device is mounted on the harvester, in particular at the rear of the harvester, and/or on a platform that is connected to the harvester, in particular to the rear of the harvester, and/or on a self-driving device that is adapted to drive in the travel direction of the harvester, in particular behind the harvester in respect to the travel direction of the harvester, moving the harvester in the travel direction through or along the agricultural field and harvesting plants or parts of the plants in at least one row of the agricultural field, recording images by using the analysis device, wherein the images are recorded with a first camera that is adapted to record images of plants or parts of plants that are located to the side of the harvester, measuring distances between the analysis device and plants and/or parts of plants by using the analysis device, wherein the distances are measured using a range sensing device, establishing a position of the analysis device by using a global navigation satellite system (GNSS) receiver, combining data of at least one image of a plant or of a part of a plant recorded with the analysis device and data of at least one distance between the analysis device and the plant or part of the plant that is on the at least one image measured by the analysis device, determining plant characteristics of a plant or of a part of a plant dependent on the combined data.

Herein, above ground crops are preferably understood as crops comprising plants with at least parts of the plants being arranged above the ground. In particular, above ground crops can be understood as plants, wherein the plants are at least partially arranged above-ground.

Herein, harvester can be understood as a device that is adapted for harvesting plants, in particular in an agricultural field. Harvesting plants can comprise cutting plants. The harvesting device can comprise a cutting device for cutting plants and/or parts of plants in an agricultural field and/or an extracting device for extracting plants and/or parts of plants out of the ground of an agricultural field. In particular, the harvester can be a combine.

Preferably, the analysis device is arranged behind the harvesting device in respect to the travel direction of the harvester. The harvesting device is preferably located at the front of the harvester. The analysis device is preferably located at the rear of the harvester. Preferably, the analysis device is mechanically, and preferably detachably, mounted to the harvester. In another embodiment, the analysis device can be arranged on a platform that is mechanically, and preferably detachably, connected to the harvester, in particular at the rear of the harvester. In another embodiment, the analysis device can be arranged on a self-driving device that is adapted to drive behind the harvester in the travel direction of the harvester. Herein, travel direction is in particular understood as the direction in which the harvester moves when it moves forwards. Preferably, the analysis device is located behind the harvesting device with respect to the travel direction.

In managing agricultural processes, including analysis of above ground crops in an agricultural field, the geographical location of plant material is important. For example, in plant production plant material is located in fields. Herein, such fields are referred to as agricultural fields. A field management unit can be created by defining georeferenced boundaries thereof. This can be done, for example, using a geographic information system (GIS). A GIS can be understood as a system designed to capture, store, manipulate, analyse, manage and/or present a variety of types of spatial and/or geographical data with georeferenced coordinates, in particular latitude and longitude. The boundaries of a field management unit preferably are in the form of the borderlines of a field, which preferably form one circumferentially closed line enclosing the field management unit therein. The geographical location of these boundaries can be stored in a geospatial database, for example as a polygon or in the form of connected point coordinates. A field management sub-unit can comprise one or several of the following group: block, plot, stripe, row, sowing line, point location. The field management sub-units can also be understood as smaller areas, which subdivide a larger field management unit. For example, also a hierarchy of field management sub-units within a field management unit can exist.

In particular, the solution and its preferred embodiments described herein are suitable for field management units, in particular field management sub-units, with a relatively small size as used in pre-breeding, breeding and/or plant line, plant population and plant variety development. For these smaller sized field management units, in particular field management sub-units, and the specific requirements of pre-breeding, breeding and/or plant line, plant population or plant variety development, a particularly high accuracy of position data is necessary. For example, different varieties may be placed in small field management sub-units close to each other. In particular, for application areas like pre-breeding, breeding and/or plant line, plant population or plant variety development, it is important to manage agricultural processes on different field management sub-units individually. Thus, exact position data is necessary to differentiate between the individual small field management sub-units and the different lines, populations or varieties placed therein. In particular pre-breeding, breeding and/or plant line, plant population or plant variety development applications, it can even be desirable to differentiate field management sub-units in the form of point coordinates and/or individual plant material, such as, but not limited to, individual seeds and/or individual plants.

Herein, such a small field management sub-unit may also be referred to as a breeding plot or research plot. Preferably, a field management sub-unit, in particular a breeding plot or research plot, has an essentially rectangular shape with an edge length on its larger edge of max. 15 m, or max. 12 m, or max. 10 m, or max. 7.5 m, or max. 5 m, or max. 3 m, or max. 1.5 m, or max. 1.25 m. Preferably, a field management sub-unit, in particular a breeding plot, has an edge length on its shorter edge of max. 3 m, or max. 2 m, or max. 1.5 m, or max. 1.35 m, or max. 1.25 m. Non-limiting examples of sizes of a field management sub-unit, in particular a breeding plot, are: 3 m x 10 m, e.g. for maize; 1.35 m x 7,5 m, e.g. for Beta vulgaris; 1.25 m x 1 m, e.g. for cereals like wheat, rye or barley.

A field management unit may comprise blocks and plots as field management sub-units, for example. Preferably, a plurality of plots forms a block and a plurality of blocks may be present in a field management unit. Further for example, field management sub-units may be in the form of rows, stripes, sowing lines and/or point locations. For example, a field management sub-unit may comprise several rows, wherein each row comprises one or more sowing lines and wherein each sowing line comprises several lined up point locations. It is also possible that a field management unit comprises only one single field management sub-unit. In this case, the single field management sub-unit may be identical to the field management unit. The single field management sub-unit may also comprise only a part of the field management unit, for example.

Both the field management unit, in particular its boundaries, as well as the field management sub-units are preferably georeferenced. Herein, georeferencing preferably means that the boundaries of a field management unit and/or of a field management sub-unit is related to a ground system of geographic coordinates, preferably using a coordinate reference system, which in turn preferably can be related to a geodetic reference system. Preferably, the georeferenced boundaries of the field management unit and/or field management sub-units are stored in the geospatial database, which preferably also comprises a GIS Web server, such as but not limited to Oracle Esri Enterprise. The GIS Web server preferably hosts web mapping services and/or a GIS-based web application. The geospatial database and/or servers may be hosted internally or in the cloud. In particular, the creation of a field management unit and its layout including field management sub-units and storing the related georeferenced information in the geospatial database allows for further information to be attributed thereto.

The method described herein can comprise a connection and/or can be connected to such a geospatial database, in particular to achieve an efficient and automated analysis.

Preferably, recording images by using the analysis device is conducted while the harvester moves in the travel direction. In particular, images are recorded by using the analysis device during the harvesting process.

The first camera is adapted to record images of plants or parts of plants that are located to the side of the harvester. In particular, the first camera is arranged to record images of plants that are located parallel and distanced to the travel direction. Preferably, the first camera is arranged to record images of plants that are arranged in a row which is oriented parallel to the travel direction and/or which is oriented sideways of the harvester.

Preferably, first camera is arranged with its optical axis rotated about a vertical axis with an angle in a range of 45° to 135°, in particular 70° to 110°, preferably perpendicular, with respect to the travel direction of the harvester.

The distances are measured using the range sensing device. Preferably, the range sensing device comprises at least one sensor. The range sensing device can use one or several of the following methods: ultrasonic measurements and/or radar measurements and/or camera/laser measurements and/or laser measurements and/or dual-camera measurements. Preferably, the range sensing device is adapted to measure the distance between the analysis device and plants and/or parts of plants. The range sensing device can comprise a lidar sensor.

Establishing a position of the analysis device can be conducted by using Real-time kinematic (RTK) positioning. Real-time kinematic (RTK) positioning is a satellite navigation technique used to enhance the precision of position data derived from satellite-based positioning systems (global navigation satellite systems, GNSS) such as GPS, GLONASS, Galileo, NavIC and BeiDou. In addition or alternatively to the information content of the signal, RTK uses measurements of the phase of the signal's carrier wave and provides real-time correction data with up to centimeter-level accuracy. The range to a satellite is essentially calculated by multiplying the carrier wavelength times the number of whole cycles between the satellite and the rover and adding the phase difference. RTK uses a base station and one or more rover units to reduce the rover units' position error. The base station transmits correction data to the one or more rover units. For example, the base station re-broadcasts the phase of the carrier that it observes, and the one or more rover units compare their own phase measurements with the one received from the base station.

Preferably, combining data of at least one image of a plant or of a part of a plant recorded with the analysis device and data of at least one distance between the analysis device and the plant or part of the plant that is on the at least one image measured by the analysis device comprises selecting data from the image obtained via the first camera and corresponding data obtained via measurements of the range sensing device, wherein both information regard to the same plant and/or part of the plant.

Preferably, combining comprises combining image data and distance data and/or position data of one specific plant and/or one specific part of a plant. Preferably, combining comprises linking image data with distance data and/or position data of one specific plant and/or one specific part of a plant to each other.

Preferably, determining plant characteristics is conducted using combined data with information on the position of the plant or part of the plant and image information of the plant or of the part of the plant.

Preferably, plant characteristics of a plant or of a part of a plant comprise information on precise absolute position of the plant or of the part of the plant.

Herein, the terms plant traits and plant characteristics are used synonymously.

Determining plant characteristics can be conducted during harvesting and/or after harvesting. Determining plant characteristics can be conducted using the analysis device and/or using another device. Preferably, plant characteristics comprise position data of the plant.

The solution and its preferred embodiments described herein also further below, has a number of advantages, such as but not limited to the ones described in the following.

Advantageously, the harvest process using a harvester, such as for example a combine, is an essential piece of the breeding process as several highly relevant plant characteristics, such as breeding traits, can be determined which makes the harvest an important activity. Plant characteristics, such as breeding traits, measured parallel to the harvesting process in an automated manner as achieved with the solution described herein are therefore highly efficiently generated and offer the systematic assessment of these traits.

Further advantageously and preferably, the solution and its preferred embodiments described herein allows for a cost efficient way of determining plant characteristics, as only the analysis device is needed in addition to the harvester and no other sensor devices for measuring plant characteristics, such as robots, are needed.

A further advantage is that by obtaining images from the side of the plants it is possible to obtain valuable information on the plant characteristics that are of interest. This would not be possible with images taken from above the plants, for example by using an analysis device arranged on a drone, as most of the plant characteristics cannot be seen from above the plants. Furthermore, the plants are neither damaged nor moved by a analysis device that moves within the rows of the plants in an agricultural field as the analysis device that is arranged at the rear of the harvester is preferably distanced to the plants that are analyzed.

The combination of the analysis device and the harvester is particularly advantageous as with the harvester one or more rows of plants in an agricultural field can be cut and/or extracted and the analysis device can subsequently analyse one or more rows that are arranged next to the rows that were just harvested by the harvester. This way it is possible to analyse every row of plants in an agricultural field during the harvesting process.

Another advantage of the solution and its preferred embodiments described herein is that due to the combination of the first camera and the range sensing device it is possible to distinguish individual neighbouring plant rows in an image and thus to achieve a correct assignment of genotypes. This is possible due to the additional 3D depth information obtained using the range sensing device. Thus, with such a multi-sensor fusion approach, comprising combining image data, 3D data (distance data), and GNSS data, plant and organ based detection and trait determination with position information can be obtained.

Another advantage of the solution and its preferred embodiments described herein is that plant characteristics, such as for example ear height of maize, in particular linked with position information, can be determined automatically parallel to (i.e. during) the harvesting process.

The solution and its preferred embodiments described herein advantageously offer the possibility to systematically measure phenotypic data of fully grown crops parallel to the harvest process. Previously, it was only possible to generate this data with a high amount of manual workflow. The systematic measurement of plant characteristics as described herein, such as ear height, offers for the first time a systematic breeding approach for this trait.

According to a preferred embodiment, the images are recorded from the side of the plants to record side views of the plants and/or parts of the plants.

Recording images from the side of the plants can be achieved by arranging the analysis device at the rear of the harvester with the first camera arranged to record images of plants that are arranged sideways the harvester.

An advantage of recording images from the side is that it is possible to obtain information that cannot be obtained from images that are recorded from the top of the plants, as parts of the plants are only visible from the side. Thus, certain plant characteristics can only be determined by using images recorded from the side of the plants.

Preferably, the method comprises determining the absolute position and/or the row and/or the field management unit in which a plant or a part of a plant that is recorded on an image is positioned by using the established position of the analysis device and the determined distance between the analysis device and the plant or part of the plant.

With data from the range sensing device and from the global navigation satellite system (GNSS) receiver, the position of a plant and/or of a part of a plant can precisely be determined. Thus, it is possible to determine a relative position in respect to the analysis device and/or an absolute position of a plant and/or of a part of a plant. Furthermore, it is possible to determine the row, in particular the georeferenced row, in which a specific plant, in particular a georeferenced plant, is located. By combining the data of recorded image with position data, it is possible to determine the position, for example relative position and/or absolute position and/or row and/or field management unit, of a plant on a recorded image.

According to a preferred embodiment, the method comprises identifying plants and/or part of plants, in particular maize ears, on the recorded images by using an object detection algorithm, preferably based on deep convolutional neural networks and trained on previously recorded, in particular manually annotated images.

For example to identify maize ears on images, the object detection algorithm can be used. Preferably, the object detection algorithm relies on deep convolutional neural networks (CNN), in particular Mask-R-CNN and/or can be trained on previously recorded and manually annotated images of maize ears. Mask R-CNN is preferably understood herein as an object detection model based on deep convolutional neural networks (CNN). Preferably, the algorithm can output pixel masks for each detected maize ear on recorded images. The pixel locations can be transformed into world coordinates (i.e. absolute position data) using the sensor fusion approach described herein. The world coordinates can then for example be used to determine a height-above-ground for each detected maize ear.

In this way, it is possible to automatically identify certain objects such as specific parts of plants and/or plant characteristics in recorded images.

Preferably, the method comprises determining the distances between the analysis device and the identified plants and/or part of plants by measuring the distances between the analysis device and identified plants and/or parts of plants by using the range sensing device.

With an absolute position information of the analysis device via the GNSS receiver and the relative position between analysis device and a plant and/or a part of a plant, the absolute position of the plant and/or the part of the plant can be determined. Thus, it is possible to determine in which row and/or in which plot and/or in which field management unit the plant is located.

Further it is preferred that the method comprises determining an absolute length and/or an absolute width and/or a diameter and/or a position and/or an orientation of a plant or a part of a plant that is recorded on an image, and preferably identified by using the object detection algorithm, by using the recorded image of the plant or part of the plant and the determined distance between the analysis device and the plant or part of the plant.

Preferably, dimensions of a plant and/or of a part of a plant can be determined. Orientation can preferably be understood as angle between a vertical or horizontal line and a line in which the plant or part of the plant is arranged.

According to a preferred embodiment, the method comprises placing plant material, in particular sowing seeds, in the agricultural field, wherein georeferenced positions of the placed plant material are recorded using a global navigation satellite system (GNSS) receiver, wherein the recorded georeferenced positions of the placed plant material are stored in a database.

Placing plant material can comprise sowing seeds, in particular maize seeds, and/or placing young plants and/or cuttings and/or bulbs and/or tubers and/or grafts.

By storing georeferenced positions of placed plant material, in particular in a database, it is possible to link information on the placed plant material with information on determined plant characteristics of the plants grown from the placed plant material.

Preferably, placing plant material comprises placing plant material of different genotypes in different field management units. In particular placing plant material comprises placing plant material of different genotypes in different plots and/or sub-plots.

According to a preferred embodiment, the method comprises recording images by using the analysis device, wherein the images are recorded with a second camera that is adapted to record images of plants or parts of plants that are located to the side of the harvester.

Preferably, the second camera is arranged to record images of plants that are arranged in a row which is oriented parallel to the travel direction and/or which is oriented sideways of the harvester.

Preferably, the second camera is arranged with its optical axis rotated about a vertical axis with an angle in a range of 45° to 135°, in particular 70° to 110°, preferably perpendicular, with respect to the travel direction of the harvester.

Preferably the second camera is arranged with its optical axis rotated about a vertical axis with an angle in a range of 135° to 225° with respect to the optical axis of the first camera.

Preferably, the first camera and the second camera are of the same camera type.

It is preferred that the first camera is arranged to record images of plants on one side of the harvester and the second camera is arranged to record images of plants on the other side of the harvester. Thus, it is possible to record images from both sides of the harvester. With this camera setup, it is possible to record images of plants in one or more rows located sideways to the harvester independent on if the rows that are not yet harvested are arranged to the left or to the right of the harvester with respect to the travel direction of the harvester.

Further, it is preferred that the method comprises determining a suitable amount of a substance, in particular a fertilizer and/or a plant protection product and/or water, to be applied within a defined period of time for a georeferenced plant dependent on plant characteristics of the plant.

Preferably, after determining plant characteristics the amount of a substance such as fertilizer or a plant protection product that was previously applied can be evaluated. In particular, from such an evaluation it can be derived and/or adapted a suitable amount of substance to be applied, in particular for an application during the next cycle between placing plant material and harvesting.

Preferably, the method comprises applying the suitable amount of the substance in the defined period of time to the georeferenced plant. For example, dependent on the determined ear height (and possibly by taking also other data into account such as weather data, applied substance data, etc.) an amount of a substance to be used in future application(s) in a field management unit can be determined.

According to another aspect, it is provided an analysis device for analysing above ground crops in an agricultural field, wherein preferably the analysis device is adapted to be used in the method as described herein, wherein the analysis device comprises: a first camera that is adapted to record images of a plant or of a part of a plant, a range sensing device that is adapted to measure a distance between the analysis device and a plant or a part of a plant, a global navigation satellite system (GNSS) receiver for establishing a position of the analysis device, a control unit, wherein the control unit is signally connected to the first camera and the range sensing device and the global navigation satellite system (GNSS) receiver, wherein the control unit is adapted to record characteristics of a plant and/or of a part of a plant by combining data of at least one image of a plant or of a part of a plant recorded with the analysis device and data of at least one distance between the analysis device and the plant or part of the plant that is on the at least one image measured by the analysis device.

Preferably, the analysis device can be mounted to a harvester, in particular to a combine. However, the analysis device can also be used independently of a harvester. It is preferred to provide an interface for mechanically connecting the analysis device to a harvester or another device.

According to a preferred embodiment, the analysis device is adapted to determine plant characteristics of a plant and/or part of a plant dependent on the combined data.

Preferably, the analysis device is adapted to determine the absolute position of a plant and/or part of a plant.

Preferably, a second camera that is adapted to record images of a plant or of a part of a plant, wherein preferably the second camera is adapted to record images of plants or parts of plants that are located to the side of the harvester, wherein preferably the second camera is arranged with its optical axis rotated about a vertical axis with an angle in a range of 135° to 225° with respect to the optical axis of the first camera, wherein preferably the second camera is a hyperspectral camera, in particular an RGB camera.

According to a preferred embodiment, the first camera is a hyperspectral camera, in particular an RGB camera.

Preferably, the range sensing device is adapted to measure distances, in particular by targeting a plant or a part of a plant with electromagnetic waves and measuring the time for reflected electromagnetic waves to return to the range sensing device.

Preferably, the range sensing device is adapted to obtain 3-dimensional (3D) data of a plant or of a part of a plant. Preferably, the range sensing device is a lidar sensor and/or a radar sensor.

When using a range sensing device that is adapted to obtain 3D data, advantageously only one sensor is needed for the range sensing device, as the sensor can obtain data with information on plants that are located on both sides of the analysis device, in particular on both sides of the harvester with respect to the travel direction of the harvester.

According to a preferred embodiment, characteristics of a plant and/or of a part of a plant comprise at least one of the following group: absolute position of the plant, a size of the plant, in particular a height of the plant, a size of a part of the plant, in particular of a fruit of the plant, preferably of a maize ear, an ear height, an ear orientation and/or an ear angle, a leave size, a distribution parameter, in particular determining the distribution of ears, a spectral profile of the plant and/or part of the plant, morphological and/or functional traits on organ level, in particular colour of detected organs.

Morphological traits preferably comprise position and/or orientation and/or size of a plant and/or of a part of a plant. Functional traits preferably are derived from information on the colour of a plant and/or part of a plant. For example, a green colour can indicate a photosynthesis and a brown colour can indicate a biotic or abiotic reaction of the plant.

Preferably, the analysis device comprises an inertial measurement unit (IMU) for determining a current position of the analysis device, wherein the inertial measurement unit (IMU) is preferably signally connected to the global navigation satellite system (GNSS) receiver and/or the control unit.

Further it is preferred that calculating characteristics of a plant and/or of a part of a plant comprises projecting 3-dimensional data points obtained by the sensor into images and assigning image pixels to specific planting rows and/or to specific field management units dependent on the distance between the analysis device and the plant and/or part of the plant.

According to another aspect, it is provided a system for harvesting plants and analysing above ground crops in an agricultural field, comprising a harvester with a harvesting device that is adapted to harvest plants and/or parts of plants in an agricultural field, wherein the harvester has a travel direction, an analysis device as described herein, wherein the analysis device is mounted on the harvester, in particular at the rear of the harvester, and/or on a platform that is connected to the harvester, in particular to the rear of the harvester, and/or on a self-driving device that is adapted to drive in the travel direction of the harvester, in particular behind the harvester, wherein in the travel direction of the harvester the analysis device is arranged behind the harvesting device, wherein preferably the analysis device is arranged at the rear of the harvester.

Preferably, the harvester is adapted to harvest cereal grain, in particular maize, and/or helianthus, and/or plants comprising vegetables, in particular solanum lycopersicum, and/or Helianthus annuus, and/or plants comprising fruits, in particular apples and/or cherries.

According to another aspect, it is provided a use of an analysis device as described herein and/or a system as described herein for analysing georeferenced plants and/or parts of plants during harvesting of the plants and/or the parts of plants in an agricultural field.

With regard to the advantages, embodiments, and details of the embodiments of the various aspects of the solutions described herein reference is also made to the description of the corresponding features, details and advantages of the respective other aspects and their further embodiments.

Preferred embodiments shall now be described with reference to the attached drawings, in which
- Fig. 1:: shows a schematic representation of an example of an analysis device arranged at the rear of a harvester;
- Fig. 2:: shows a schematic representation of an example of an analysis device arranged at the rear of a harvester, wherein the harvester moves parallel to plant rows;
- Fig. 3:: shows an isometric view of a schematic representation of an example of an analysis device;
- Fig. 4:: shows a back view of a schematic representation of the example of an analysis device;
- Fig. 5a:: shows an example of an image recorded with the analysis device with measured plant heights;
- Fig. 5b:: shows an example of an image recorded with the analysis device with measured plant heights and detected objects;
- Fig. 6:: shows a diagram with ear heights determined using the analysis device versus manually determined values;
- Fig. 7:: shows a schematic representation of an example of a method for analysing above ground crops in an agricultural field.

In the figures, elements with the same or comparable functions are indicated with the same reference numerals.

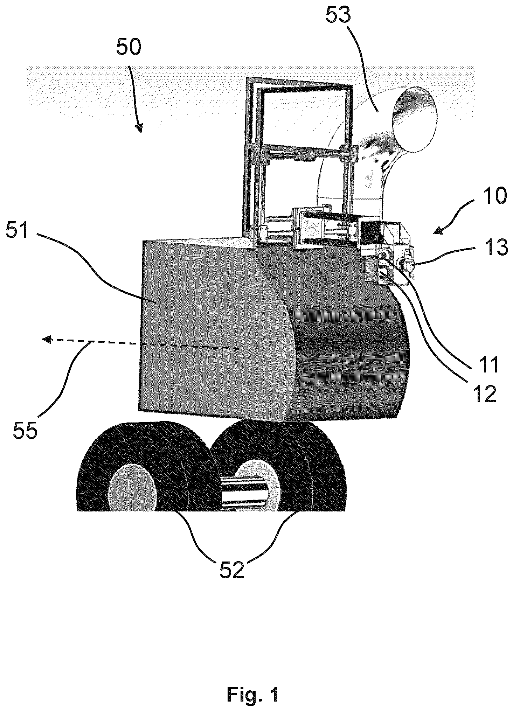

Fig. 1 shows a schematic representation of an example of an analysis device 10 arranged at the rear of a harvester 50. Only the rear of the harvester 50 is shown. The rear of the harvester 50 comprises a rear part 51, wheels 52, and a pipe 53. The harvester can move in travel direction 55 (indicated by the dashed arrow).

The analysis device 10 is arranged and mounted on the rear of the harvester 50. The analysis device comprises a first camera 11 that is arranged to record images from plants that are located to the right of the harvester (with respect to the travel direction 55) and a second camera 12 that is arranged to record images from plants that are located to the left of the harvester. With the first camera and the second camera, images of plants that are arranged parallel to the travel direction, and distanced to the travel direction axis, located on the left side and on the right side of the harvester can be recorded. The analysis device 10 further comprises a range sensing device 13 that is arranged to measure distances between the analysis device and plants and/or parts of plants.

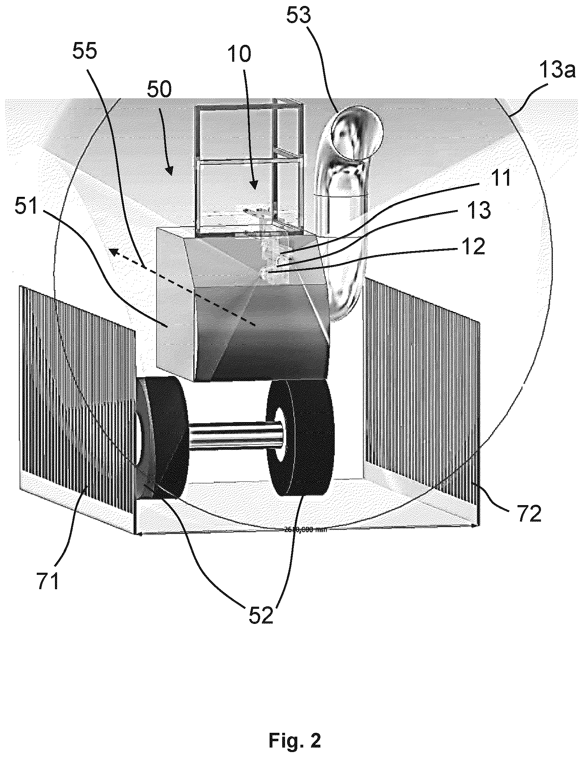

Fig. 2 shows a schematic representation of an example of an analysis device 10 arranged at the rear of a harvester 50. In Fig. 2, both the analysis device 10 and the rear of the harvester 50 are designed as described in Fig. 1. Again, only the rear of the harvester 50 is shown. The harvester 50 moves in travel direction 55 (indicated by the dashed arrow). On the left side of the harvester 50, a row of plants 71 is located. This row of plants 71 is oriented parallel to the travel direction 55 and distanced to the axis of the travel direction 55 (indicated by the dashed arrow). On the right side of the harvester 50, another row of plants 72 is located. This row of plants 72 is also oriented parallel to the travel direction 55 and distanced to the axis of the travel direction 55 (indicated by the dashed arrow), but on the opposite side of the harvester compared to the plant row 71. The analysis device 10 is adapted to analyse both plant rows 71, 72. Plant row 72 is analysed by using the first camera 11 for recording images of the plant row 72 and the range sensing device 13 for determining the relative position of the analysed plants in the plant row 72. Plant row 71 is analysed by using the second camera 12 for recording images of the plant row 71 and the range sensing device 13 for determining the relative position of the analysed plants in the plant row 71. This way, both plant rows 71, 72 can be analysed at the same time parallel to a harvesting process conducted by the harvester 50. The circle 13a indicates the measurement area of the range sensing device 13 that is able to measure in three dimensions resulting in such a circle 13a.

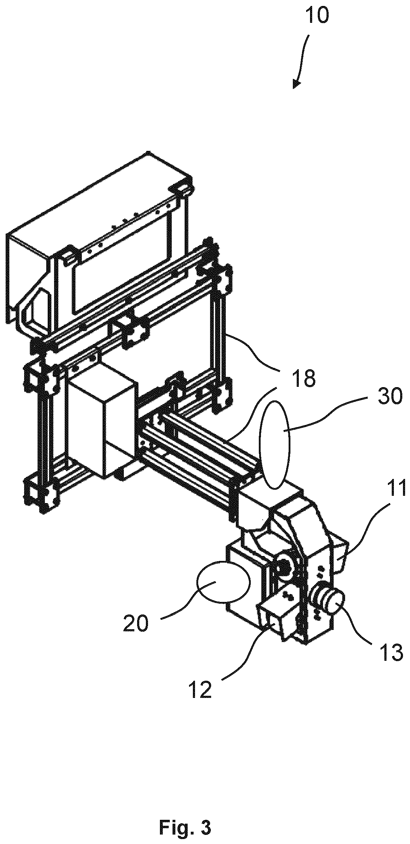

Fig. 3 shows an isometric view of a schematic representation of an example of an analysis device 10. The analysis device 10 comprises a first camera 11 that is preferably arranged to record images from plants that are located to the right of the harvester and a second camera 12 that is preferably arranged to record images from plants that are located to the left of the harvester. This way plants on both sides of the harvester can be analysed. The first camera 11 and the second camera 12 are arranged on top of each other. The camera axes of the first and the second camera point in opposite directions with respect to the horizontal part of these axes. The analysis device further comprises a framework 18. The framework 18 can be connected to a harvester, in particular to the rear of a harvester. The analysis device 10 comprises a control unit 20, wherein the control unit 20 is signally connected to the first camera 11 and the range sensing device 13 and the global navigation satellite system (GNSS) receiver 30. The control unit 20 is adapted to record characteristics of a plant and/or of a part of a plant by combining data of at least one image of a plant or of a part of a plant recorded with the analysis device 10 and data of at least one distance between the analysis device 10 and the plant or part of the plant that is on the at least one image measured by the analysis device 10.

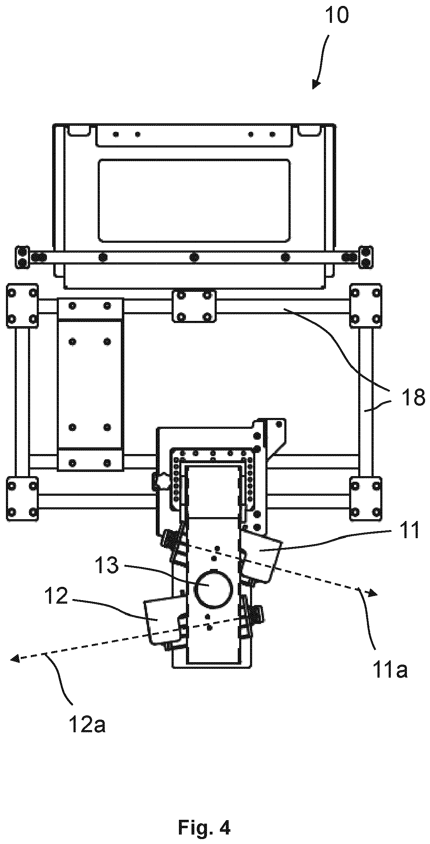

Fig. 4 shows a back view of a schematic representation of the example of an analysis device 10. Fig. 4 shows a back view of the analysis device 10 shown in Fig. 3. The analysis device 10 comprises a first camera 11 that is preferably arranged to record images from plants that are located to the right of the harvester and a second camera 12 that is preferably arranged to record images from plants that are located to the left of the harvester. The first camera 11 is adapted to record images of plants or parts of plants that are located to the right side of the harvester.

The first camera 11 is arranged with its optical axis 11a rotated about a vertical axis with an angle of 90° with respect to the travel direction of a harvester. The second camera 12 is adapted to record images of plants or parts of plants that are located to the left side of a harvester. The second camera 12 is arranged with its optical axis 12a rotated about a vertical axis with an angle of 90° with respect to the travel direction of the harvester. The second camera 12 is arranged with its optical axis 12a rotated about a vertical axis with an angle of 180° with respect to the optical axis 11a of the first camera 11.

The optical axis 11a of the first camera 11 and the optical axis 12a of the second camera 12 are both slightly inclined downwards, preferably with the same angle with respect to a horizontal plane. Preferably, the angle in which the first camera 11 and the second camera 12 are oriented in respect to a horizontal plane can be adjusted dependent from the height in which the analysis device is arranged above the ground and/or dependent from the height of the plants or parts of the plants to be analysed are arranged above the ground.

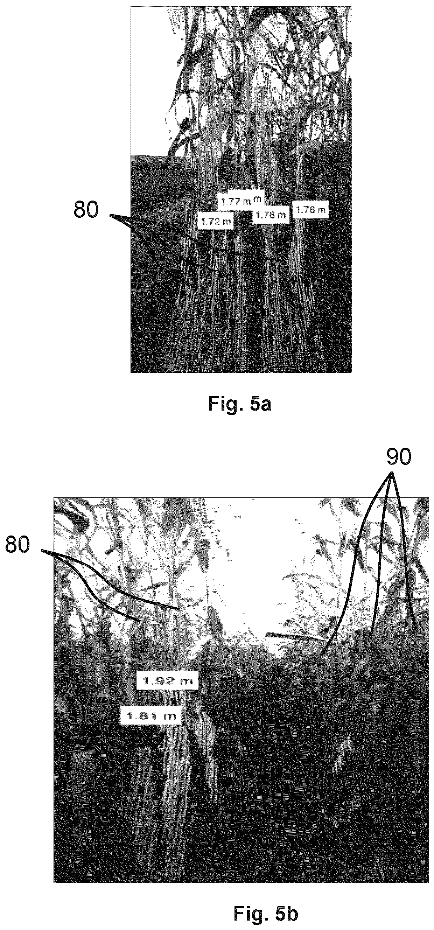

Fig. 5a shows an example of an image recorded with the analysis device with measured plant heights. The plants are automatically detected by using an object detection algorithm as described herein. The detected plants are indicated as coloured plants 80. The heights of the plants are automatically calculated and the height of each plant is indicated on the recorded image.

To obtain within-canopy measurements the method starts with the breeding trail planning process. A set of genotypes are selected in a breeding database as a program for a breeding trial with multiple locations. The corresponding corn trials are planned and planted using a geospatial information system, which shares with the Breeding information the individual plot information based on a unique plotID. The georeferenced plan predetermines and controls with high precision using high precision georeferencing sensors the driving and dripping of the seeding process. The plants are cultivated in the field until they are harvested. The harvester is equipped with a multi-sensor setup combining passive and active optical sensor technology (i.e. first camera, second camera and range sensing device) and high precision georeferencing sensors (including GNSS receiver). The multi-sensor setup is installed at the end of the harvester (i.e. at the rear of the harvester) to make advantage of the increased space between rows after the harvesting process.

Measurements in front of the harvester would be characterized by high movements of the plants due to the harvest process and do not allow precise measurements. The combination of this multi-sensor setup with the pre-sowing determined plan of the geospatial information system allows for the mapping of the recorded sensor data to the genotype.

The multi-sensor platform is facing and sensing data to both sides perpendicular to the driving direction of the harvester. Thereby, the sensor platform generates morphological/3D and functional/spectral vertical plant profiles of the adjacent plants and can map these to a unique plotID after sensor fusion and data processing. The multi-sensor platform consists of two frame camera devices, i.e. the first camera and the second camera, a 3D laser scanner, i.e. the range sensing device, and a high precision GNSS sensor with IMU, comprising a GNSS receiver. The first and the second camera are oriented side-facing (one to the left, one to the right) and record pictures of the plants that are arranged in rows parallel to the driving direction of the harvester.

All sensors are extrinsically calibrated to allow for transformation between sensor coordinate systems. By reprojecting 3D points from the laser scanner into images, image pixels can be assigned to specific planting rows (1st row closest to the analysis device, 2nd row, 3rd row, etc.). In combination with the geolocation of the sensor and each plot, genotype information can be assigned to pixel regions within the image. The point cloud of the laser scanner is used to identify important landmarks (e.g. a plane describing the soil position). Furthermore, the laser scanner measures distances in absolute units of the world coordinate system. In combination, the system is able to provide absolute length measurements (e.g. object size or height-above-ground) for pixel regions of interest. Such pixel regions can be plant parts, like ears or leaves, or whole plants.

The sensor fusion approach also allows to transfer colour information from camera images onto points of the point cloud. Thereby, a vertical colour profile can be obtained for plants and/or leaves in adjacent plant rows. This colour profile can be used to evaluate maturity and/or senescence of plants at harvest. The detection system is also designed to detect other morphological (e.g. size, lodging, breakage) or functional (biotic or abiotic stress) traits on organ level.

To identify maize ears on images, an object detection algorithm is used that relies on deep convolutional neural networks (Mask-R-CNN) and was trained on previously recorded and manually annotated images of maize ears. The algorithm outputs pixel masks for each detected maize ear on recorded images. The pixel locations can be transformed into world coordinates using the sensor fusion approach. The world coordinates are then used to determine the height-above-ground for each detected maize ear.

For all detected traits of a given plotID the individual values are statistically analysed to produce representative plot value of the given trait. As the trait values of the neighbouring plots are also recorded this systematic approach allows to analyse for example for the traits ear height and plant height to analyse the effect of the neighbouring plots values on the plot of interest.

The field design can be taken into account for example in two row plots trials the randomization plan can have a secondary condition to ensure that in planting direction the repetition of genotypes is minimized in the odd and even drive paths determined by the parallel harvesting row size of the harvesting machine and the plot harvest pattern of the harvest. This precondition ensures that a minimal number of replications or locations are needed to measure all entries of a trial. Before the harvester starts to harvest of two row trials a single or a multitude of rows and/or plots, the harvester drives an initial drive path parallel to the first drive path of the initially harvested plots of a trial to obtain data of the first plots before they are harvested.

Fig. 5b shows an example of an image recorded with the analysis device with measured plant heights and detected objects. The plants are automatically detected by using an object detection algorithm as described herein. The detected plants are indicated as coloured plants 80 in the left row of plants on the image. The heights of the plants are automatically calculated and the height of each plant is indicated on the recorded image. Furthermore, maize ears 90 are automatically detected by using an object detection algorithm as described herein. The detected maize ears are indicated by displaying the outer contour of the maize ears 90.

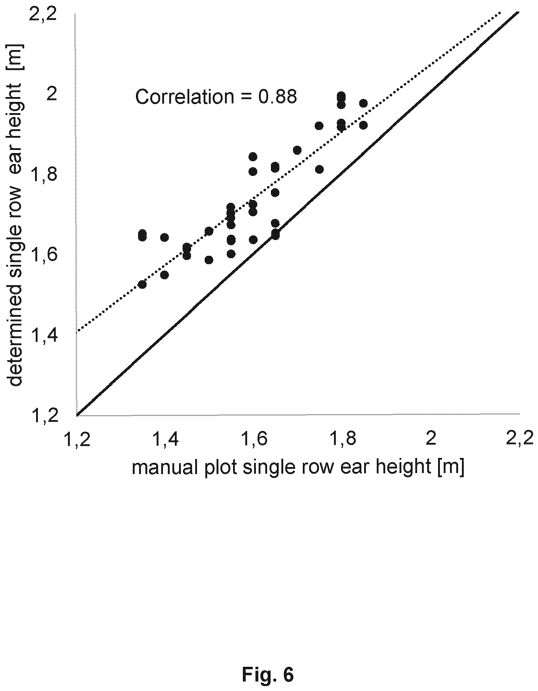

Fig. 6 shows a diagram with maize ear heights determined using the analysis device versus manually determined values. Single row ear height in meters (m) on the vertical axis is plotted versus manual plot single row ear height in meters (m). With a correlation of 0.88 the determined single row ear height closely match the results obtained by manual evaluation. This result shows that an automated evaluation of maize ear height (and also of other plant characteristics) is possible with the approach described herein.

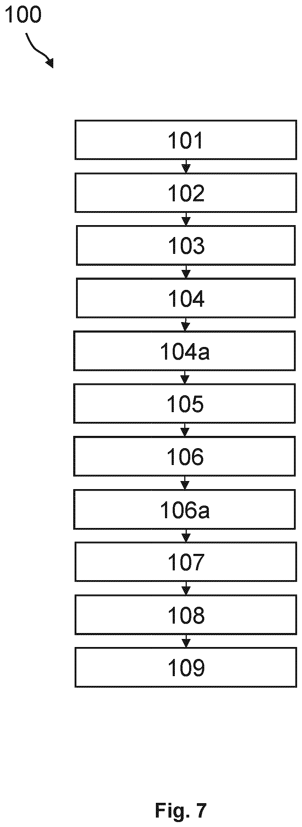

Fig. 7 shows a schematic representation of an example of a method for analysing above ground crops in an agricultural field. The method 100 for analysing above ground crops in an agricultural field comprises the steps described in the following:

In a step 101, providing a harvester 50 with a harvesting device, wherein the harvesting device is adapted to harvest plants and/or parts of plants in an agricultural field. In a step 102, arranging an analysis device 10 behind the harvesting device in respect to a travel direction of the harvester, wherein preferably the analysis device is mounted on the harvester, in particular at the rear of the harvester, and/or on a platform that is connected to the harvester, in particular to the rear of the harvester, and/or on a self-driving device that is adapted to drive in the travel direction of the harvester, in particular behind the harvester in respect to the travel direction of the harvester. In a step 103, moving the harvester in the travel direction through or along the agricultural field and harvesting plants or parts of the plants in at least one row of the agricultural field.

In a step 104, recording images by using the analysis device, wherein the images are recorded with a first camera 11 that is adapted to record images of plants or parts of plants that are located to the side of the harvester. In a step 104a, recording images by using the analysis device, wherein the images are recorded with a second camera 12 that is adapted to record images of plants or parts of plants that are located to the side of the harvester.

In a step 105, measuring distances between the analysis device and plants and/or parts of plants by using the analysis device, wherein the distances are measured using a range sensing device 13. In a step 106, establishing a position of the analysis device by using a global navigation satellite system (GNSS) receiver. In a step 106a, determining the absolute position and/orthe row and/orthe field management unit in which a plant or a part of a plant that is recorded on an image is positioned by using the established position of the analysis device and the determined distance between the analysis device and the plant or part of the plant.

In a step 107, combining data of at least one image of a plant or of a part of a plant recorded with the analysis device and data of at least one distance between the analysis device and the plant or part of the plant that is on the at least one image measured by the analysis device. In a step 108, determining plant characteristics of a plant or of a part of a plant dependent on the combined data.

In a step 109, identifying plants and/or part of plants, in particular maize ears, on the recorded images by using an object detection algorithm, preferably based on deep convolutional neural networks and trained on previously recorded, in particular manually annotated, images, and preferably determining the distances between the analysis device and the identified plants and/or part of plants by measuring the distances between the analysis device and identified plants and/or parts of plants by using the range sensing device.

### List of reference signs

- 10: analysis device
- 11: first camera
- 11a: optical axis of the first camera
- 12: second camera
- 12a: optical axis of the second camera
- 13: range sensing device
- 13a: measurement area of the range sensing device
- 18: framework
- 20: control unit
- 30: GNSS receiver
- 50: harvester
- 51: rear part of the harvester
- 52: wheels of the harvester
- 53: pipe of the harvester
- 55: travel direction of the harvester
- 71, 72: row of plants
- 80: coloured plants
- 90: detected maize ears
- 100: method for analysing above ground crops in an agricultural field
- 101: providing a harvester with a harvesting device
- 102: arranging an analysis device behind the harvesting device
- 103: moving the harvester in the travel direction
- 104, 104a: recording images by using the analysis device
- 105: measuring distances
- 106: establishing a position of the analysis device
- 106a: determining an absolute position and/or row and/or field management unit
- 107: combining data
- 108: determining plant characteristics
- 109: identifying plants and/or part of plants

## Claims

1. A method (100) for analysing above ground crops in an agricultural field, comprising
- providing (101) a harvester (50) with a harvesting device, wherein the harvesting device is adapted to harvest plants and/or parts of plants in an agricultural field,
- arranging (102) an analysis device (10) behind the harvesting device in respect to a travel direction of the harvester, wherein preferably the analysis device is mounted on the harvester, in particular at the rear of the harvester, and/or on a platform that is connected to the harvester, in particular to the rear of the harvester, and/or on a self-driving device that is adapted to drive in the travel direction of the harvester, in particular behind the harvester in respect to the travel direction of the harvester,
- moving (103) the harvester in the travel direction through or along the agricultural field and harvesting plants or parts of the plants in at least one row of the agricultural field,
- recording (104) images by using the analysis device, wherein the images are recorded with a first camera (11) that is adapted to record images of plants or parts of plants that are located to the side of the harvester,
- measuring (105) distances between the analysis device and plants and/or parts of plants by using the analysis device, wherein the distances are measured using a range sensing device (13),
- establishing (106) a position of the analysis device by using a global navigation satellite system (GNSS) receiver,
- combining (107)
∘ data of at least one image of a plant or of a part of a plant recorded with the analysis device and
∘ data of at least one distance between the analysis device and the plant or part of the plant that is on the at least one image measured by the analysis device,
- determining (108) plant characteristics of a plant or of a part of a plant dependent on the combined data.

2. The method according to the preceding claim, wherein
- the images are recorded from the side of the plants to record side views of the plants and/or parts of the plants.

3. The method according to at least one of the preceding claims, comprising
- determining (106a) the absolute position and/or the row and/or the field management unit in which a plant or a part of a plant that is recorded on an image is positioned by using the established position of the analysis device and the determined distance between the analysis device and the plant or part of the plant.

4. The method according to at least one of the preceding claims, comprising
- identifying (109) plants and/or part of plants, in particular maize ears, on the recorded images by using an object detection algorithm, preferably based on deep convolutional neural networks and trained on previously recorded, in particular manually annotated, images,
- and preferably determining the distances between the analysis device and the identified plants and/or part of plants by measuring the distances between the analysis device and identified plants and/or parts of plants by using the range sensing device.

5. The method according to at least one of the preceding claims, comprising
- determining an absolute length and/or an absolute width and/or a diameter and/or a position and/or an orientation of a plant or a part of a plant that is recorded on an image, and preferably identified by using the object detection algorithm, by using the recorded image of the plant or part of the plant and the determined distance between the analysis device and the plant or part of the plant.

6. The method according to at least one of the preceding claims, comprising
placing plant material, in particular sowing seeds, in the agricultural field, wherein georeferenced positions of the placed plant material are recorded using a global navigation satellite system (GNSS) receiver, wherein the recorded georeferenced positions of the placed plant material are stored in a database, and/or
- placing plant material comprises placing plant material of different genotypes in different field management units.

7. The method according to at least one of the preceding claims, comprising
- recording (104a) images by using the analysis device, wherein the images are recorded with a second camera (12) that is adapted to record images of plants or parts of plants that are located to the side of the harvester,
- wherein preferably the second camera is arranged with its optical axis rotated about a vertical axis with an angle in a range of 45° to 135°, preferably 70° to 110°, with respect to the travel direction of the harvester,
wherein preferably the second camera is arranged with its optical axis rotated about a vertical axis with an angle in a range of 135° to 225° with respect to the optical axis of the first camera.

8. The method according to at least one of the preceding claims, comprising
- determining a suitable amount of a substance, in particular a fertilizer and/or a plant protection product and/or water, to be applied within a defined period of time for a georeferenced plant dependent on plant characteristics of the plant,
- and preferably applying the suitable amount of the substance in the defined period of time to the georeferenced plant.

9. An analysis device (10) for analysing above ground crops in an agricultural field, wherein preferably the analysis device is adapted to be used in the method according to at least one of the preceding claims, wherein the analysis device comprises:
- a first camera (11) that is adapted to record images of a plant or of a part of a plant,
- a range sensing device (13) that is adapted to measure a distance between the analysis device and a plant or a part of a plant,
- a global navigation satellite system (GNSS) receiver for establishing a position of the analysis device,
- a control unit, wherein the control unit is signally connected to the first camera and the range sensing device (13) and the global navigation satellite system (GNSS) receiver,
- wherein the control unit is adapted to record characteristics of a plant and/or of a part of a plant by combining
∘ data of at least one image of a plant or of a part of a plant recorded with the analysis device and
∘ data of at least one distance between the analysis device and the plant or part of the plant that is on the at least one image measured by the analysis device.

10. Analysis device according to the preceding claim, wherein
- the analysis device is adapted to determine plant characteristics of a plant and/or part of a plant dependent on the combined data, and/or wherein
- the analysis device is adapted to determine the absolute position of a plant and/or part of a plant.

11. Analysis device according to at least one of the preceding claims, comprising a second camera (12) that is adapted to record images of a plant or of a part of a plant, wherein preferably the second camera is adapted to record images of plants or parts of plants that are located to the side of the harvester,
wherein preferably the second camera is arranged with its optical axis rotated about a vertical axis with an angle in a range of 135° to 225° with respect to the optical axis of the first camera,
wherein preferably the second camera is a hyperspectral camera, in particular an RGB camera.

12. Analysis device according to at least one of the preceding claims, wherein
- the first camera is a hyperspectral camera, in particular an RGB camera, and/or
- the range sensing device is adapted to measure distances, in particular by targeting a plant or a part of a plant with electromagnetic waves and measuring the time for reflected electromagnetic waves to return to the range sensing device, and/or
- wherein the range sensing device is adapted to obtain 3-dimensional data of a plant or of a part of a plant, and/or
- wherein the range sensing device is a lidar sensor and/or a radar sensor.

13. Analysis device according to at least one of the preceding claims, wherein
characteristics of a plant and/or of a part of a plant comprise at least one of the following group:
- absolute position of the plant,
- a size of the plant, in particular a height of the plant,
- a size of a part of the plant, in particular of a fruit of the plant, preferably of a maize ear,
- an ear height,
- an ear orientation and/or an ear angle,
- a leave size,
- a distribution parameter, in particular determining the distribution of ears,
- a spectral profile of the plant and/or part of the plant,
- morphological and/or functional traits on organ level, in particular colour of detected organs

14. Analysis device according to at least one of the preceding claims, comprising
- an inertial measurement unit (IMU) for determining a current position of the analysis device, wherein the inertial measurement unit (IMU) is preferably signally connected to the global navigation satellite system (GNSS) receiver and/or the control unit.

15. Analysis device according to at least one of the preceding claims, wherein
calculating characteristics of a plant and/or of a part of a plant comprises projecting 3-dimensional data points obtained by the sensor into images and assigning image pixels to specific planting rows and/or to specific field management units dependent on the distance between the analysis device and the plant and/or part of the plant.

16. A system for harvesting plants and analysing above ground crops in an agricultural field, comprising
- a harvester (50) with a harvesting device that is adapted to harvest plants and/or parts of plants in an agricultural field, wherein the harvester has a travel direction,
- an analysis device (10) according to at least one of the preceding claims,
∘ wherein the analysis device is
▪ mounted on the harvester, in particular at the rear of the harvester, and/or
▪ on a platform that is connected to the harvester, in particular to the rear of the harvester, and/or
▪ on a self-driving device that is adapted to drive in the travel direction of the harvester, in particular behind the harvester,
∘ wherein in the travel direction of the harvester the analysis device is arranged behind the harvesting device,
wherein preferably the analysis device is arranged at the rear of the harvester,
- wherein preferably the harvester is adapted to harvest cereal grain, in particular maize, and/or helianthus, and/or plants comprising vegetables, in particular solanum lycopersicum, and/or plants comprising fruits, in particular apples and/or cherries.

17. Use of an analysis device (10) according to at least one of the preceding claims and/or a system according to at least one of the preceding claims for analysing georeferenced plants and/or parts of plants during harvesting of the plants and/or the parts of plants in an agricultural field.
